# EUROPÄISCHE PATENTANMELDUNG

(11) **EP 1 746 778 A2**
(43) Veröffentlichungstag der Anmeldung: **24.01.2007**
(21) Anmeldenummer: 06116381.2
(22) Anmeldetag: 30.06.2006
(51) Int. Cl.: H04L 12/28

(54) **Verfahren und Vorrichtung zur Steuerung der Registrierung von Geräten, insbesondere von netzfähigen Hausgeräten in einer Netzwerkanordnung**

(30) Priorität: 19.07.2005 DE 102005033670
(71) Anmelder: BSH Bosch und Siemens Hausgeräte GmbH, 81739 München (DE)
(72) Erfinder: Werkmann, Horst, 85276, Pfaffenhofen / Ilm (DE); Buchner, Theo, 93333, Neustadt / Donau (DE)

(57) **Zusammenfassung**

Zur Steuerung der Registrierung von Geräten, insbesondere von netzfähigen Hausgeräten in einer Netzwerkanordnung, an der die Geräte für eine Übertragung von Datensignalen und Befehlen zu und/oder von anderen Geräten und/oder Einrichtungen angeschlossen sind und in der sich die Geräte für eine Registrierung mit Adressenangaben anmelden, die als Adressenteile jeweils eine die Ansteuerung des jeweiligen Gerätes in der Netzwerkanordnung ermöglichende Netzwerkadresse, eine den Gerätetyp des jeweiligen Gerätes angebende Gerätebezeichnung und eine dem jeweiligen Gerät individuell zugehörige Gerätenummer umfassen, werden unter Berücksichtigung von Adressenangaben von in der Netzwerkanordnung gegebenenfalls bereits registrierten Geräten Vergleichsvorgänge (S1, S2, S3, S6) bezüglich der einzelnen Adressenteile durchgeführt; auf Grund der dadurch erzielten Auswertungsergebnisse (S4, S5, S7, S8) wird entweder die Adressenangabe eines sich in der Netzwerkanordnung anmeldenden Geräts zur Registrierung übernommen oder sie wird gegebenenfalls zusammen mit der Adressenangabe eines in der Netzwerkanordnung registrierten Gerätes gelöscht.

## Beschreibung

Die Erfindung bezieht sich auf ein Verfahren und eine Vorrichtung zur Steuerung der Registrierung von Geräten, insbesondere von netzfähigen Hausgeräten in einer Netzwerkanordnung, an der die betreffenden Geräte für eine Übertragung von Datensignalen und Befehlen zu und/oder von anderen Geräten und/oder Einrichtungen angeschlossen sind und in der sich die betreffenden Geräte für eine Registrierung mit Adressenangaben anmelden, die eine die Ansteuerung des jeweiligen Gerätes in der Netzwerkanordnung ermöglichende Netzwerkadresse, eine den Gerätetyp des jeweiligen Gerätes angebende Gerätebezeichnung und eine dem jeweiligen Gerät individuell zugehörige Seriennummer umfassen, unter Berücksichtigung von Adressenangaben von in der Netzwerkanordnung gegebenenfalls bereits registrierten Geräten.

Es sei hier erwähnt, dass unter netzfähigen Hausgeräten Hausgeräte verstanden werden, die in einer Netzwerkanordnung angeschlossen und in dieser durch Daten- und Befehlsübertragungen miteinander sowie mit Steuerungs- und Überwachungseinrichtungen kommunizieren können.

Im Zuge der Anmeldung und Registrierung von Geräten und Einrichtungen in einer Netzwerkanordnung ist es üblich, die betreffenden Geräte bzw. Einrichtungen mit ihnen zugewiesenen Adressen in der Netzwerkanordnung zu erfassen. Dadurch kann dann in der Netzwerkanordnung zwar festgestellt werden, dass die betreffenden Adressen bereits vergeben sind. Eine Doppelregistrierung von zwei Geräten bzw. Einrichtungen unter ein und derselben Adresse ist jedoch bei dieser einfachen Art der Anmeldung und Registrierung von Geräten und Einrichtungen durch die erwähnte Adressenzuweisung nicht ausgeschlossen.

Bei der Anmeldung und Registrierung von Geräten in einer Netzwerkanordnung, in der die betreffenden Geräte nicht nur eine Registrierungsadresse besitzen, sondern in der jedem Gerät eine Gesamtadresse zugehörig ist, die eine die Ansteuerung des betreffenden Gerätes in der Netzwerkanordnung ermöglichende Netzwerkadresse, eine den Gerätetyp des jeweiligen Gerätes angebende Gerätebezeichnung und eine dem jeweiligen Gerät individuell zugehörige Seriennummer umfasst, ist die Situation allerdings weitaus komplexer. Dies trifft insbesondere für netzfähige Hausgeräte zu, die entsprechend dem EHS-Protokoll (European Home System) betrieben werden.

Nach dem EHS-Protokoll ablaufende Registrierungsprozeduren sind bereits an verschiedenen Stellen veröffentlicht worden (siehe z.B. die mit Urheberrechtsvermerken von 1996 und 1997 versehenen Veröffentlichungen im Internet unter
- http://www.domotics.com/homesys/HSpapers/EHSproto.htm - The European Home Systems Protocol - Concepts and Products;
- http://www.domotics.com/homesys/HSpapers/daimlerbenz.htm - System Technology for Private Houses - EHS).
Die entsprechend dem EHS-Protokoll verwendeten Netzwerkadressen bestehen aus zwei Adressenteilen, nämlich aus einem sogenannten Hausadressenteil, der z.B. von einer zentralen Einrichtung der Netzwerkanordnung sämtlichen Geräten eines Haushalts zugeteilt werden kann und der als statischer Adressenteil bezeichnet werden kann, und aus einem sogenannten Kettungs- bzw. Linkadressenteil, der geräteindividuell vorgesehen ist und der als dynamischer Adressenteil bezeichnet werden kann.

Während sich in der Regel der den Hausgeräten eines Haushalts zugeteilte Hausadressenteil nach seiner Zuteilung zu den betreffenden Hausgeräten nicht mehr ändert, kann sich der dem jeweiligen Hausgerät individuell zugehörige Linkadressenteil sehr wohl nach Wegnahme des betreffenden Hausgeräts von der Netzwerkanordnung und erneutem Anschließen an dieser Netzwerkanordnung ändern. Der Grund für eine solche Änderung liegt in der Prozedur, die gemäß dem EHS-Protokoll für die Festlegung des für das jeweilige Hausgerät zu verwendenden Linkadressenteiles auszuführen ist.

Danach veranlasst ein Hausgerät, dem ein Hausadressenteil bzw. eine Hausadresse zugeteilt worden ist, die Abgabe eines Linkadressenteiles bzw. einer Linkadresse, welche(n) das betreffende Hausgerät zu benutzen beabsichtigt, an sämtliche an der Netzwerkanordnung angeschlossenen weiteren Hausgeräte. Von diesen Hausgeräten sind im vorliegenden Fall allerdings lediglich die zum selben Haushalt, zu dem das betreffende eine Hausgerät gehört, gehörenden weiteren Hausgeräte von Interesse. Wird die Linkadresse, deren Abgabe durch das genannte eine Hausgerät gerade veranlasst worden ist, bereits von einem anderen Hausgerät desselben Haushalts benutzt, so muss sich das betreffende andere Hausgerät gewissermaßen mit einer Widerspruchsmeldung melden. Daraufhin veranlasst das genannte eine Hausgerät die Abgabe einer anderen Linkadresse, bezüglich der die übrigen insbesondere zu dem betreffenden Haushalt gehörenden Hausgeräte prüfen, ob es sich dabei nicht um ihre eigene Linkadresse handelt. Diese Prozedur wird solange fortgesetzt, bis auf die Abgabe einer Linkadresse kein Widerspruch erhoben wird, woraufhin dann dem betreffenden einen Hausgerät, welches die Abgabe dieser Linkadresse veranlasst hat, diese Linkadresse als Teil seiner Netzwerkadresse gehört.

Die geschilderte Linkadressen-Prozedur läuft dabei nach jedem erneuten Anschließen eines Hausgeräts an der Netzwerkanordnung wieder ab, da ja nach der Wegnahme des betreffenden einen Hausgerätes von der Netzwerkanordnung zwischenzeitlich die Linkadresse, welche dem genannten einen Hausgerät gehörte, von einem anderen Hausgerät übernommen sein kann, welches sich vor dem erneuten Anschließen des genannten einen Hausgerätes an der betreffenden Netzwerkanordnung angeschlossen hat.

Neben der vorstehend betrachteten Netzwerkadresse, bestehend aus einem Hausadressenteil und einem Linkadressenteil, besitzt jedes Hausgerät noch eine Gerätebezeichnung und eine Geräte- bzw. Seriennummer. Die Gerätebezeichnung gibt den jeweiligen Gerätetyp an, also beispielsweise E-Herd, Trockner, Waschmaschine, etc. Die jeweilige Geräte- bzw. Seriennummer ist eine dem jeweiligen Hausgerät individuell zugehörige Nummer, die das betreffende Hausgerät eindeutig bezeichnet und die nicht in Nummernkreisen von anderen Hausgerätetypen vorkommt.

Im Zuge der erläuterten Netzwerkadressenfestlegung und insbesondere im Zuge der dabei erfolgenden Linkadressen-Prozedur kann es nun zu fehlerhaften Adressenzuweisungen kommen. Wenn beispielsweise ein an der Netzwerkanordnung angeschlossenes Hausgerät auf die durch ein anderes Hausgerät veranlasste Abgabe einer Linkadresse nicht durch Abgabe eines Widerspruchsbefehls reagiert, weil es diese Linkadresse wegen zu hoher Netzwerksdämpfung nicht erhalten hat, obwohl es sich bei dieser Linkadresse um seine eigene Linkadresse handelt, dann gibt es in der Netzwerkanordnung zwei Hausgeräte mit derselben Netzwerkadresse. Damit können dann aber die betreffenden Hausgeräte nicht mehr eindeutig adressiert werden. Nimmt man beispielsweise einmal an, dass es sich bei zwei solchen Hausgeräten zum einen um einen Backofen und zum anderen um eine Waschmaschine handelt, die also beide ein und dieselbe Netzwerkadresse besitzen, so kann der Backofen im Falle einer Abfrage durch eine zentrale Einrichtung beispielsweise eine Schleuderdrehzahl von 1600 min⁻¹ melden, und der Waschmaschine kann beispielsweise ein Befehl zum Backen mit Heißluft bei 200°C gegeben werden.

Der Erfindung liegt nun die Aufgabe zugrunde, Probleme der vorstehend geschilderten Art zu vermeiden, die daraus resultieren, dass ein in der Netzwerkanordnung sich neu oder erneut anmeldendes Gerät, insbesondere ein netzfähiges Hausgerät in dieser Netzwerkanordnung mit Adressenangaben registriert wird, die in wesentlichen Teilen, und zwar insbesondere mit der Netzwerkadresse mit Adressenangaben eines in der Netzwerkanordnung bereits registrierten Gerätes, insbesondere eines netzfähigen Hausgerätes übereinstimmen. Mit anderen Worten ausgedrückt besteht die Aufgabe der Erfindung darin, für eine solche Registrierung von Geräten in der Netzwerkanordnung zu sorgen, dass diese Geräte eindeutig adressierbar sind.

Gelöst wird die vorstehend aufgezeigte Aufgabe bei einem Verfahren der eingangs genannten Art erfindungsgemäß dadurch, dass die Adressenangaben der sich in der Netzwerkanordnung anmeldenden Geräte jeweils mit Adressenangaben von in dieser bereits registrierten Geräten verglichen werden und dass lediglich bei vollständiger Übereinstimmung der jeweils miteinander verglichenen Adressenteile oder bei Nichtüberstimmung zumindest der Netzwerkadressen der jeweils miteinander verglichenen Adressenangaben die Adressenangaben der sich in der Netzwerkanordnung anmeldenden Geräte für eine Registrierung herangezogen werden.

Die Erfindung bringt den Vorteil mit sich, dass auf relativ einfache Weise sichergestellt ist, dass in der genannten Netzwerkanordnung nur solche Geräte, insbesondere netzfähige Hausgeräte registriert werden, deren Registrierung nicht zu Problemen der eingangs erläuterten Art führen. Es werden nämlich in der betreffenden Netzwerkanordnung nur solche Geräte und insbesondere netzfähige Hausgeräte registriert, die nach ihrer Registrierung in der betreffenden Netzwerkanordnung eindeutig adressiert werden können.

Vorzugsweise wird für den genannten Vergleich jeweils einer der folgenden Vergleichsvorgänge ausgeführt:
- bei Anmeldung eines Gerätes mit gleicher Netzwerkadresse, mit gleicher Gerätebezeichnung und mit gleicher Seriennummer wie ein in der Netzwerkanordnung bereits registriertes Gerät wird diese Adressenangabe als dem betreffenden registrierten Gerät bereits zugehörige Adressenangabe ohne eine Änderung bewertet,
- bei Anmeldung eines Gerätes mit gleicher Netzwerkadresse, mit verschiedener Gerätebezeichnung und mit gleicher Seriennummer wie ein in der Netzwerkanordnung bereits registriertes Gerät wird die dem betreffenden registrierten Gerät zugehörige Adressenangabe durch die dem sich anmeldenden Gerät zugehörige Adressenangabe für eine Registrierung ersetzt,
- bei Anmeldung eines Gerätes mit gleicher Netzwerkadresse und entweder mit verschiedener Gerätebezeichnung und verschiedener Seriennummer oder mit gleicher Gerätebezeichnung und verschiedener Seriennummer wie ein in der Netzwerkanordnung bereits registriertes Gerät werden die dem betreffenden registrierten Gerät zugehörige Adressenangabe und die dem sich anmeldenden Gerät zugehörige Adressenangabe jeweils gelöscht,
- bei Anmeldung eines Gerätes mit verschiedener Netzwerkadresse und mit gleicher Seriennummer wie ein in der Netzwerkanordnung bereits registriertes Gerät wird die dem betreffenden registrierten Gerät zugehörige Adressenangabe durch die dem sich anmeldenden Gerät zugehörige Adressenangabe für eine Registrierung ersetzt
- und bei Anmeldung eines Gerätes mit verschiedener Netzwerkadresse und mit verschiedener Seriennummer wie ein in der Netzwerkanordnung bereits registriertes Gerät wird die dem betreffenden sich anmeldenden Gerät zugehörige Adressenangabe für eine Neuregistrierung herangezogen.

Hierdurch ergibt sich der Vorteil einer sicheren Erfassung derjenigen Geräte für eine Registrierung, die in der Netzwerkanordnung problemlos adressiert werden können.

Zweckmäßigerweise wird bei Anmeldung eines Gerätes mit einer von der Netzwerkadresse eines in der Netzwerkanordnung bereits registrierten Gerätes verschiedenen Netzwerkadresse zusätzlich auch die Gerätebezeichnung des sich anmeldenden Gerätes berücksichtigt. Hierdurch lassen sich auf relativ einfache Weise zusätzliche Informationen aus erhaltenen Löschbefehlen zum Löschen von Adressenangaben gewinnen.

In dem Fall, dass auf Grund der Anmeldung eines Gerätes bzw. Hausgerätes in der Netzwerkanordnung die Situation auftritt, dass sowohl die einem in der betreffenden Netzwerkanordnung registrierten Gerät zugehörige Adressenangabe als auch die dem sich anmeldenden Gerät zugehörige Adressenangabe jeweils gelöscht werden, können gemäß weiterer Ausbildung der Erfindung verschiedene Prozeduren angewandt werden.

So kann entsprechend einer zweckmäßigen Weiterbildung des Verfahrens gemäß der Erfindung das jeweilige Gerät, dessen Adressenangaben in der Netzwerkanordnung gelöscht worden sind, veranlasst werden, sich erneut in der Netzwerkanordnung anzumelden und registrieren zu lassen. Dadurch wird auf relativ einfache Weise sichergestellt, dass derartige Geräte nicht unberücksichtigt in der Netzwerkanordnung bleiben.

Zweckmäßigerweise erfolgt die Veranlassung einer erneuten Anmeldung für eine Registrierung in der Netzwerkanordnung durch Abgabe eines gesonderten Befehls an das jeweilige Gerät auf das Löschen der diesem zugehörigen Adressenangabe in der Netzwerkanordnung hin. Dies bringt den Vorteil einer besonders sicheren Veranlassung einer erneuten Anmeldung und gegebenenfalls Registrierung eines Gerätes in der Netzwerkanordnung mit sich, dessen zugehörige Adressenangabe zuvor gelöscht worden ist.

Eine alternative Möglichkeit zur Veranlassung einer erneuten Anmeldung für eine Registrierung des jeweiligen Gerätes in der Netzwerkanordnung auf das Löschen der diesem zugehörigen Adressenangabe hin besteht vorzugsweise darin, dass die Prozedur der Netzwerkadressenzuteilung zumindest hinsichtlich eines geräteindividuellen Adressenteiles für das jeweiligen Gerät erneut nach Ablauf einer festlegbaren Zeitspanne durchgeführt wird. Hierdurch ergibt sich der Vorteil, dass ohne gesonderte Befehlsübertragung ausgekommen werden kann, um für das jeweilige Gerät, dessen zugehörige Adressenangabe zuvor gelöscht worden ist, eine erneute Netzwerkadressenzuteilung veranlassen zu können. In diesem Fall kann in vorteilhafter Weise der Umstand ausgenutzt werden, dass bezüglich Geräte, die von einer zentralen Einrichtung der Netzwerkanordnung nicht auf ihr Vorhandensein abgefragt werden, geschlossen werden kann, dass diesen keine gültige Netzwerkadresse mehr zur Verfügung steht.

Vorzugsweise wird in einer Netzwerkanordnung mit einer Busleitung, an der die jeweiligen Geräte über Buskoppler angeschlossen sind, in denen die Netzwerkadresse und die Seriennummer einen zugehörigen Gerätes gespeichert werden und die mit wenigstens einem weiteren Netzwerk über wenigstens eine Netzübergangseinrichtung verbunden sind, in der die gesamten Adressenangaben der mit der genannten Busleitungsanordnung verbundenen Geräte auf deren Registrierung hin gespeichert werden, ein Vergleich der Adressenangaben eines sich in der Netzwerkanordnung neu anmeldenden Gerätes mit den Adressenangaben der in dieser Netzwerkanordnung registrierten Geräten in der zumindest einen Netzübergangseinrichtung oder in einer dieser zugeordneten Einrichtung durchgeführt. Hierdurch ergibt sich der Vorteil, dass der genannte Vergleich der Adressenangaben auf einfache Weise an einer zentralen Stelle innerhalb der Netzwerkanordnung erfolgen kann.

Zur Durchführung des Verfahrens gemäß der Erfindung wird vorzugsweise eine Vorrichtung der eingangs genannten Art eingesetzt, die dadurch gekennzeichnet ist, dass eine Vergleicher- und Auswertungseinrichtung vorgesehen ist, welche die Adressenangaben der sich in der Netzwerkanordnung anmeldenden Geräte jeweils mit Adressenangaben von in dieser bereits registrierten Geräten zu vergleichen gestattet und welche lediglich bei vollständiger Übereinstimmung der jeweils miteinander verglichenen Adressenteile oder bei Nichtüberstimmung zumindest der Netzwerkadressen der jeweils miteinander verglichenen Adressenangaben die Adressenangaben der sich in der Netzwerkanordnung anmeldenden Geräte für eine Registrierung freizugeben erlaubt.

Hierdurch ergibt sich der Vorteil eines insgesamt besonders geringen Aufwands zur Sicherstellung, dass in der genannten Netzwerkanordnung nur solche Geräte und insbesondere netzfähige Hausgeräte registriert werden, die keinen Anlass mit ihren Adressenangaben zu Problemen geben, wie sie eingangs erläutert worden sind. Es werden durch die Vorrichtung gemäß der Erfindung also in der vorhandenen Netzwerkanordnung nur solche Geräte und zwar insbesondere netzfähige Hausgeräte registriert, die in dieser Netzwerkanordnung eindeutig adressiert werden können.

Vorzugsweise ist die Vergleicher- und Auswertungseinrichtung so ausgebildet, dass durch sie
- bei Anmeldung eines Gerätes mit gleicher Netzwerkadresse, mit gleicher Seriennummer und mit gleicher Gerätebezeichnung wie ein in der Netzwerkanordnung bereits registriertes Gerät diese Adressenangabe als dem betreffenden bereits registrierten Gerät zugehörige Adressenangabe bewertbar ist,
- bei Anmeldung eines Gerätes mit gleicher Netzwerkadresse und mit gleicher Seriennummer, aber mit verschiedener Gerätebezeichnung wie ein in der Netzwerkanordnung bereits registriertes Gerät die dem betreffenden registrierten Gerät zugehörige Adressenangabe durch die dem sich anmeldenden Gerät zugehörige Adressenangabe für eine Registrierung ersetzbar ist,
- bei Anmeldung eines Gerätes mit gleicher Netzwerkadresse und entweder mit verschiedener Seriennummer und verschiedener Gerätebezeichnung oder mit gleicher Gerätebezeichnung und verschiedener Seriennummer wie ein in der Netzwerkanordnung bereits registriertes Gerät die dem betreffenden registrierten Gerät zugehörige Adressenangabe und die dem sich anmeldenden Gerät zugehörige Adressenangabe zu löschen sind,
- bei Anmeldung eines Gerätes mit verschiedener Netzwerkadresse aber gleicher Seriennummer wie ein in der Netzwerkanordnung bereits registriertes Gerät die dem betreffenden registrierten Gerät zugehörige Adressenangabe durch die dem sich anmeldenden Gerät zugehörige Adressenangabe für eine Registrierung ersetzbar ist
- und bei Anmeldung eines Gerätes mit verschiedener Netzwerkadresse und mit verschiedener Seriennummer wie ein in der Netzwerkanordnung bereits registriertes Gerät die dem betreffenden sich anmeldenden Gerät zugehörige Adressenangabe als zu einer Neuanmeldung gehörig für eine Registrierung heranziehbar ist.

Hierdurch ergibt sich der Vorteil einer besonders wirksamen Vergleicher- und Auswertungseinrichtung für eine sichere Erfassung derjenigen Geräte zur Registrierung, die sich in der Netzwerkanordnung problemlos adressieren lassen.

Zweckmäßigerweise sind bei Anmeldung eines Gerätes mit einer von der Netzwerkadresse eines in der Netzwerkanordnung bereits registrierten Gerätes verschiedenen Netzwerkadresse zusätzlich zu den mittels der Vergleichs- und Auswertungseinrichtung verglichenen Netzwerkadressen und Seriennummern die Gerätebezeichnungen der betreffenden Geräte einbezogen. Diese Maßnahme bringt den Vorteil mit sich, dass mit relativ geringem Aufwand zusätzliche Informationen aus erhaltenen Löschbefehlen zum Löschen von Adressenangaben ableitbar sind.

Vorzugsweise ist in einer Netzwerkanordnung mit einer Busleitung, an der die jeweiligen Geräte über Buskoppler angeschlossen sind, in denen die Netzwerkadresse und die Seriennummer eines jeweils zugehörigen Gerätes speicherbar sind und die mit wenigstens einem weiteren Netzwerk über wenigstens eine Netzübergangseinrichtung verbunden sind, in der die gesamten Adressenangaben der mit der genannten Busleitung verbundenen Geräte speicherbar sind, die genannte Vergleichs- und Auswertungseinrichtung in der wenigstens einen Netzübergangseinrichtung vorgesehen oder dieser zugeordnet. Diese Maßnahme bringt den Vorteil eines besonders geringen Aufwands hinsichtlich der Durchführung der genannten Vergleichsoperationen bezüglich der Adressenangaben mit sich.

Anhand von Zeichnungen wird die Erfindung nachstehend an einem Ausführungsbeispiel näher erläutert.
- Fig. 1: zeigt in einer schematischen Darstellung eine Netzwerkanordnung welche eine Busleitung, an der eine Mehrzahl von netzfähigen Hausgeräten angeschlossen ist, und weitere durch Netzübergangseinrichtungen mit der Busleitung verbundene Netzwerke umfasst.
- Fig. 2: zeigt in einer schematischen Darstellung einen für die vorliegende Erfindung möglichen Aufbau einer der Netzübergangseinrichtungen.
- Fig. 3: veranschaulicht in einem Ablaufdiagramm Vorgänge, die gemäß der Erfindung bei einer Anmeldung von netzfähigen Hausgeräten zur Registrierung in zumindest einer der Netzübergangseinrichtungen bei Vorliegen von bestimmten Adressenkonfigurationen ablaufen.
- Fig. 4: veranschaulicht in einem Ablaufdiagramm Vorgänge, die gemäß der Erfindung bei einer Anmeldung von netzfähigen Hausgeräten zur Registrierung in zumindest einer der Netzübergangseinrichtungen bei Vorliegen von bestimmten anderen Adressenkonfigurationen ablaufen.

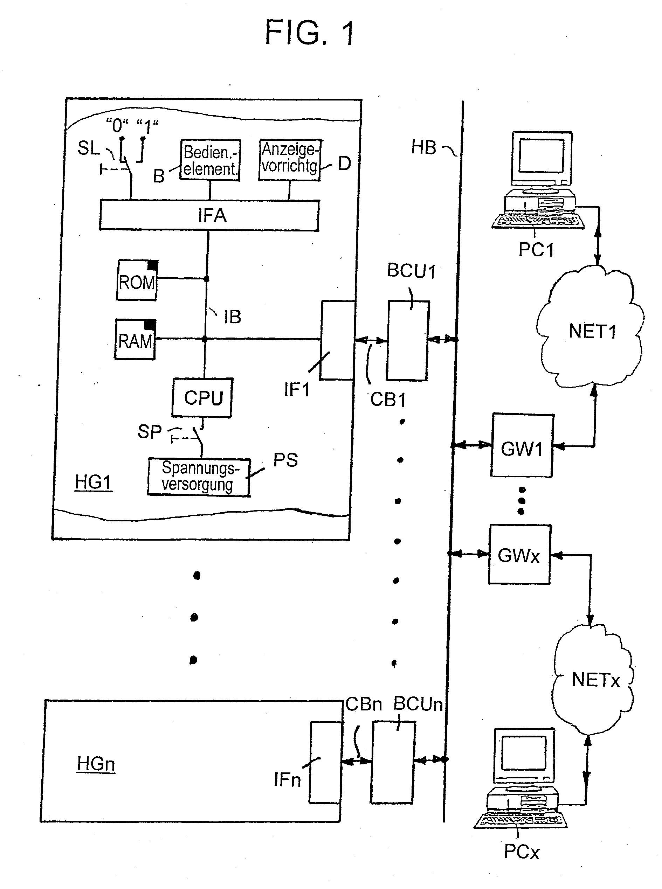

In Fig. 1 ist schematisch eine Mehrzahl von Geräten, und zwar insbesondere von netzfähigen Hausgeräten HG1 bis HGn dargestellt, die mittels Anschlussleitungen CB1 bis CBn an Netzzugangseinrichtungen in Form von Buskoppeleinheiten oder Buskopplern BCU1 bis BCUn angeschlossen und über diese mit einer zu einer Netzwerkanordnung gehörenden Busleitung HB verbunden sind, die hier durch einen sogenannten Heim- oder Hausbus gebildet ist. Es sei an dieser Stelle angemerkt, dass die in Fig. 1 gezeigte Anordnung prinzipiell Anordnungen entspricht, wie sie bereits in anderen BSH-Patentanmeldungen (DE 103 13 360 A1, DE 10 2004 061 891.7 und DE 10 2005 011 387.7) gezeigt und erläutert sind. Aus diesem Grunde wird die in Fig. 1 dargestellte Anordnung hier nur in dem für ein Verständnis der vorliegenden Erfindung erforderlichen Umfange erläutert.

Die zuvor erwähnte Busleitung HB, die beispielsweise durch das Stromnetz gebildet sein kann, an welchem die Hausgeräte HG1 bis HGn angeschlossen sind, ist über Netzübergangseinrichtungen GW1 bis GWx, welche auch als Gateways bezeichnet werden, im vorliegenden Fall mit weiteren Netzwerken NET1 bis NETx verbunden, mit denen externe Steuerungs- und/oder Überwachungsgeräte, wie Personalcomputer PC1 bis PCx verbindbar sind. Bei dem weiteren Netzwerk NET1 kann es sich beispielsweise um das Internet handeln, und bei dem weiteren Netzwerk NETx kann es sich beispielsweise um ein öffentliches Vermittlungsnetz handeln. Die genannten weiteren Netzwerke NET1 bis NETx und die Netzübergangseinrichtungen GW1 bis GWx gehören ebenfalls zu der erwähnten Netzwerkanordnung.

Bei den in Fig. 1 angedeuteten Hausgeräten HG1 bis HGn handelt es sich beispielsweise um zu einem Haushalt oder zu mehreren Haushalten gehörende gleichartige oder unterschiedliche netzfähige Hausgeräte, wie beispielsweise um eine oder mehrere Waschmaschinen, um einen oder mehrere Elektroherde, um einen oder mehrere Geschirrspüler, um ein oder mehrere Mikrowellengeräte, um einen oder mehrere Gefrierschränke, um eine oder mehrere Dunstabzugshauben, um eine oder mehrere Klimaanlagen, um eine oder mehrere Kaffeemaschinen, um einen oder mehrere Staubsauger, um eine oder mehrere Kochmulden, um einen oder mehrere Kühlschränke, etc. Die betreffenden Hausgeräte HG1 bis HGn sind hier nicht im Einzelnen dargestellt. Vielmehr sind lediglich die für ein Verständnis der vorliegenden Erfindung notwendigen Elemente gezeigt, und zwar genauer gesagt lediglich für das Hausgerät HG1.

Zu den vorstehend erwähnten Elementen des Hausgeräts HG1 gehört unter anderem eine Zentraleinheit CPU, die an einem internen Bus IB angeschlossen ist, an dem ferner ein Festwertspeicher ROM und ein Schreib-Lese-Speicher RAM sowie über eine hausgerät-interne parallel oder seriell betriebene bidirektionale Schnittstelleneinrichtung IFA eine Anzeigeeinrichtung D und Bedienungselemente B angeschlossen sind. In dem Festwertspeicher ROM können für den Betrieb des Hausgeräts HG1 dienende Arbeitsprogramme gespeichert sein, die mit Hilfe der Zentraleinheit CPU ausführbar sind. Der Schreib-Lese-Speicher RAM dient im Zuge der Ausführung derartiger Arbeitsprogramme als Arbeitsspeicher des dargestellten Rechnersystems. Die Zentraleinheit CPU kann hier zusammen mit den Speichern ROM und RAM noch zur Bereitstellung von den jeweiligen Betriebszustand des betreffenden Hausgeräts anzeigenden Zustandswerten herangezogen werden, die, wie noch ersichtlich werden wird, von dem jeweiligen Hausgerät als Abfragewerte abfragbar sind.

Die Zentraleinheit CPU ist über einen in Fig. 1 angedeuteten Schalter SP an einer Spannungsversorgungseinrichtung PS angeschlossen, die entweder die Spannungsversorgungseinrichtung des Hausgeräts HG1 sein kann, wie beispielsweise die Netzspannungsversorgungseinrichtung dieses Hausgerätes, oder die auch eine eigene bzw. gesonderte Spannungsversorgungseinrichtung (z.B. eine Batterie) dieses Hausgerätes HG1 sein kann. Im zuletzt erwähnten Falle steht die Spannungsversorgungseinrichtung PS beispielsweise auch bei einem Ausfall der für den Betrieb des betreffenden Hausgerätes HG1 dienenden Versorgungs- bzw. Netzspannung noch zur Verfügung. Dadurch können dann von dem dargestellten hausgerät-internen Rechnersystem (CPU, ROM, RAM) bestimmte Zustands- bzw. Meldesignale für eine mögliche Fernabfrage und den jeweiligen Betriebszustand des betreffenden Hausgerätes angebende Zustands- bzw. Abfragesignale bereitgestellt werden. Solche Zustands- bzw. Abfragesignale werden von den jeweiligen Hausgeräten in bestimmten festgelegten Zeitabständen abgefragt.

Mit dem internen Bus IB des Hausgerätes HG1, der üblicherweise eine mehrere Einzelleiter umfassende Busleitungsanordnung darstellt, ist im vorliegenden Fall noch eine bidirektional betriebene Schnittstelleneinrichtung IF1 verbunden, die für Kommunikationsverbindungen zu und von dem betreffenden Hausgerät HG1 dient. Diese Schnittstelleneinrichtung IF1 kann beispielsweise eine serielle Schnittstelleneinrichtung oder eine parallele Schnittstelleneinrichtung sein, wie sie für die Datenübertragung üblicherweise eingesetzt wird. Über diese Schnittstelleneinrichtung IF1 kann beispielsweise die zuvor erwähnte Abfrage der Betriebszustände des betreffenden Hausgerätes erfolgen.

Mit der weiter oben erwähnten Schnittstelleneinrichtung IFA des Hausgeräts HG1 ist noch eine mechanische Schalteinrichtung SL verbunden, die gewöhnlich an nicht leicht erreichbarer Stelle im Hausgerät HG1 angeordnet ist (und die normalerweise nur für Service-Personal zugänglich ist). Die betreffende mechanische Schalteinrichtung SL ist hier in zwei unterschiedlichen Schaltstellungen einstellbar; in der einen Schaltstellung gibt sie ein einem Verknüpfungssignal bzw. Bit "0" entsprechendes Signal an die Schnittstelleneinrichtung IFA ab, und in ihrer anderen Schaltstellung gibt sie ein einem Verknüpfungssignal bzw. Bit "1" entsprechendes Signal an die Schnittstelleneinrichtung IFA ab. Auf die Abgabe eines solchen Signals hin erfolgt eine hier nicht näher beschriebene Registrierungs- und Anmeldungsprozedur in der zugehörigen Netzzugangseinrichtung - also im Falle des Hausgeräts HG1 in der Netzzugangseinrichtung BCU1 - und in wenigstens einer der Netzübergangseinrichtungen GW1 bis GWx. Diese Prozeduren werden hier, da sie in den ersten beiden der oben erwähnten BSH-Patentanmeldungen im Einzelnen beschrieben wurden, nicht weiter betrachtet.

Zu dem in Fig. 1 schematisch angedeuteten Hausgerät HGn ist anzumerken, dass dieses schaltungsmäßig in gleicher Weise aufgebaut sein kann wie das Hausgerät HG1. Das Hausgerät HGn ist mit einer eigenen bidirektional betriebenen Schnittstelleneinrichtung IFn entsprechend der zuvor erwähnten Schnittstelleneinrichtung IF1 ausgestattet. Diese Schnittstelleneinrichtung IFn kann ebenfalls eine parallele oder serielle Schnittstelleneinrichtung sein.

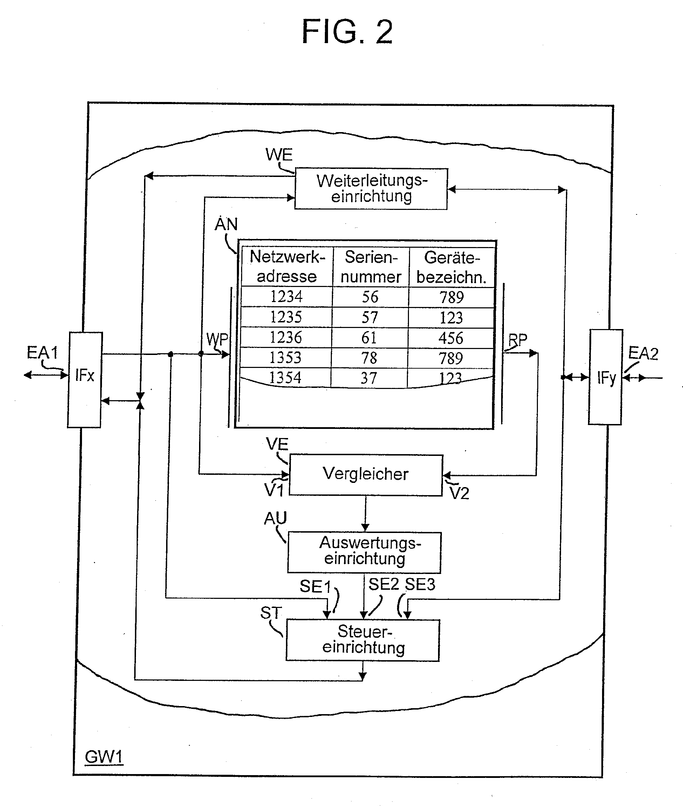

In Fig. 2 ist in einem schematischen Diagramm ein möglicher Aufbau einer der in Fig. 1 angedeuteten Netzübergangseinrichtungen, und zwar der Netzübergangseinrichtung GW1 im Hinblick auf die Realisierung der vorliegenden Erfindung veranschaulicht. Die in Fig. 2 dargestellte Netzübergangseinrichtung GW1 weist einen ersten Eingangs-Ausgangs-Anschluss EA1 und einen zweiten Eingangs-Ausgangs-Anschluss EA2 auf. Mit ihrem ersten Eingangs-Ausgangs-Anschluss EA1 ist die Netzübergangseinrichtung GW1 an der in Fig. 1 dargestellten Busleitung HB angeschlossen, und mit ihrem zweiten Eingangs-Ausgangs-Anschluss EA2 ist die Netzübergangseinrichtung GW1 mit dem in Fig. 1 dargestellten weiteren Netzwerk NET1 verbunden.

In dem in Fig. 2 nur ausschnittweise dargestellten Bereich enthält die Netzübergangseinrichtung GW1 eine mit dem ersten Eingangs-Ausgangs-Anschluss EA1 verbundene bidirektional betriebene Schnittstelleneinrichtung IFx, mit deren Ausgang bzw. Eingang in der betreffenden Netzübergangseinrichtung nachstehend näher zu betrachtende Einrichtungen verbunden sind. In entsprechender Weise ist der Eingangs-Ausgangs-Anschluss EA2 der Netzübergangseinrichtung GW1 mit einer bidirektional betriebenen Schnittstelleneinrichtung IFy verbunden, die im vorliegenden Fall mit einer Eingangs- und Ausgangsseite einer Weiterleitungseinrichtung WE verbunden ist, welche mit einem Eingang und mit einem Ausgang am Ausgang bzw. am Eingang der zuerst erwähnten Schnittstelleneinrichtung IFx angeschlossen ist. Diese Weiterleitungseinrichtung WE dient zur Weiterleitung verschiedenster Signale bzw. Daten und Befehle zwischen der Busleitung HB und dem Netzwerk NET1 sowie zwischen den an der betreffenden Busleitung HB und dem Netzwerk NET1 angeschlossenen Geräten bzw. Einrichtungen.

Mit dem in der Netzübergangseinrichtung GW1 liegenden Ausgang der Schnittstelleneinrichtung IFx sind ein Anmeldungsspeicher AN mit einem Schreibeingang WP und ein Vergleicher VE mit einem Eingang V1 verbunden. Ferner ist mit dem betreffenden Ausgang der Schnittstelleneinrichtung IFx eine Steuereinrichtung ST mit einem Eingang SE1 verbunden, die mit einem weiteren Eingang SE2 am Ausgang einer Auswertungseinrichtung AU angeschlossen ist, welche eingangsseitig am Ausgang des genannten Vergleichers VE angeschlossen ist. Die erwähnte Steuereinrichtung ST ist mit einem noch weiteren Eingang SE3 mit der in der Netzübergangseinrichtung GW1 liegenden Eingangs-Ausgangsseite der Schnittstelleneinrichtung IFy verbunden. Über ihre Eingänge SE1, SE2 und SE3 erhält die Steuereinrichtung ST verschiedene Signale zugeführt, auf Grund der sie dann von ihrem Ausgang Steuersignale zur Steuerung verschiedener Einrichtungen der Netzübergangseinrichtung GW1 abgibt, wie der Weiterleitungseinrichtung WE und des Anmeldungsspeichers AN. Dazu ist die Steuereinrichtung ST mit ihrem Ausgang im vorliegenden Fall mit dem in der Netzübergangseinrichtung GW1 liegenden Eingang der Schnittstelleneinrichtung IFx verbunden; über diese Schnittstelleneinrichtung IFx können die erwähnten Steuersignale zu den jeweils in Frage kommenden Einrichtungen hin gelangen. Bezüglich des genannten Vergleichers VE ist noch zu erwähnen, dass dieser mit einem weiteren Eingang V2 an einem Leseausgang RP des Anmeldungsspeichers AN angeschlossen ist. Die Arbeitsweise des Vergleichers VE und der mit diesem verbundenen Auswertungseinrichtung AU werden nachstehend näher ersichtlich.

An dieser Stelle sei lediglich angemerkt, dass der Vergleicher VE eine ihm eingangsseitig von der Schnittstelleneinrichtung IFx zugeführte Adressenangabe und damit Gesamtadresse eines sich in der Netzübergangseinrichtung GW1 neu oder erneut anmeldenden Hausgeräts mit in dem Anmeldungsspeicher AN bereits gespeicherten Adressenangaben bzw. Gesamtadressen von in der Netzübergangseinrichtung GW1 registrierten Hausgeräten vergleicht. Auf das jeweilige Vergleichsergebnis hin gibt die mit der Ausgangsseite des Vergleichers VE verbundene Auswertungseinrichtung AU ausgangsseitig Auswertungssignale an den Eingang SE2 der Steuereinrichtung ST ab, die daraufhin entsprechende Steuersignale an und über die Schnittstelleneinrichtung IFx zur Steuerung von verschiedenen Vorgängen abgibt, wie beispielsweise zur Löschung einer in dem Anmeldungsspeicher AN enthaltenen Gesamtadresse bezüglich eines in der Netzübergangseinrichtung GW1 registrierten Hausgeräts, zur Übernahme einer dem Anmeldungsspeicher AN eingangsseitig zugeführten Adressenangabe von einem sich anmeldenden Hausgerät zu dessen Registrierung, zur Zurückweisung einer der Eingangsseite des Anmeldungsspeichers AN zugeführten Adressenangabe eines sich in der Netzübergangseinrichtung GW1 neu oder erneut anmeldenden Hausgeräts und zusätzlich zur Löschung einer in dem Anmeldungsspeicher AN enthaltenen Adressenangabe bzw. Gesamtadresse bezüglich eines in der Netzübergangseinrichtung GW1 registrierten Hausgeräts. Gegebenenfalls werden von der Steuereinrichtung ST noch Steuersignale an diejenigen Hausgeräte abgegeben, deren Adressenangaben für eine Registrierung in der Netzübergangseinrichtung GW1 nicht akzeptiert oder aus dem dortigen Anmeldungsspeicher AN gelöscht wurden. Die zuvor erwähnte Auswertungseinrichtung AU kann gegebenenfalls mit dem Ausgang des Vergleichers VE oder mit dem Eingang SE2 der Steuereinrichtung ST integriert sein.

Wie in Fig. 2 angedeutet, enthält der Anmeldungsspeicher AN eine Vielzahl von Speicherzellen, die im vorliegenden Fall für die Speicherung von Gesamtadressen der in der Netzübergangseinrichtung GW1 jeweils registrierten Hausgeräte vorgesehen sind. Eine solche Gesamtadresse erhält, wie eingangs bereits erwähnt, eine Netzwerkadresse, unter der das zugehörige Hausgerät in der im Zusammenhang mit Fig. 1 erläuterten Netzwerkanordnung adressierbar ist, eine Serien- bzw. Gerätenummer, die das betreffende Hausgerät eindeutig identifiziert, und eine Gerätebezeichnung, die den Gerätetyp des betreffenden Hausgerätes angibt. Die Netzwerkadresse der jeweiligen Gesamtadresse umfasst dabei, wie ebenfalls eingangs erläutert, einen Hausadressenteil und einen Linkadressenteil. Bezogen auf Fig. 2 sei davon ausgegangen, dass der Hausadressenteil durch die ersten beiden Ziffernstellen der jeweiligen Netzwerkadresse gebildet ist und dass die letzten beiden Ziffernstellen der jeweiligen Hausadresse den Linkadressenteil bilden. Dabei mag im vorliegenden Fall der Hausadressenteil für die zu ein und demselben Haushalt gehörenden Hausgeräte jeweils gleich sein. Somit umfasst gemäß Fig. 2 ein durch den Hausadressenteil 12 bezeichneter Haushalt drei Hausgeräte mit den Netzwerkadressen 1234, 1235 und 1236. Diese Hausgeräte weisen die unterschiedlichen Serien- bzw. Gerätenummern 56, 57 bzw. 61 auf, und ihre Gerätebezeichnungen seien mit 789, 123 bzw. 456 gegeben. Für einen weiteren, durch den Hausadressenteil 13 bezeichneten Haushalt sind in Fig. 2 lediglich die beiden Netzwerkadressen 1353 und 1354 angegeben, die zwei Hausgeräten zugehörig sind, welche die Serien- bzw. Gerätenummer 78 bzw. 37 und die Gerätebezeichnungen 789 bzw. 123 aufweisen.

Aus den vorstehend betrachteten, in Fig. 2 angegebenen Adressenangaben für die zu den erwähnten beiden Haushalten gehörenden Hausgeräten ergibt sich somit, dass in beiden Haushalten jeweils zwei Hausgeräte mit identischen Gerätebezeichnungen 789 bzw. 123 vorhanden sind. Diese Hausgeräte, bei denen es sich beispielsweise um einen E-Herd bzw. um eine Waschmaschine handeln kann, tragen jedoch unterschiedliche Serien- bzw. Gerätenummern und sie sind auch durch unterschiedliche Netzwerkadressen adressierbar; sie gehören ja auch zu unterschiedlichen Haushalten. Bei dem die Gerätebezeichnung 456 und die Gerätenummer 61 sowie die Netzwerkadresse 1236 tragenden Hausgerät kann es sich beispielsweise um einen Trockner handeln, der beim vorliegenden Beispiel lediglich dem durch den Hausadressenteil 12 bezeichneten Haushalt zugehörig ist und der durch die Netzwerkadresse 1236 adressierbar ist, die ebenfalls für dieses Hausgerät eindeutig ist.

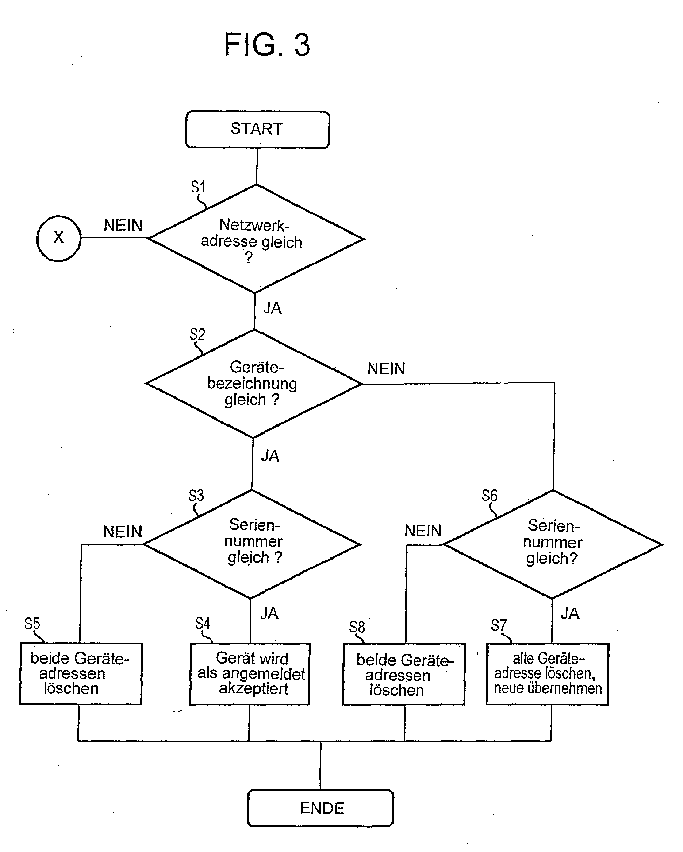

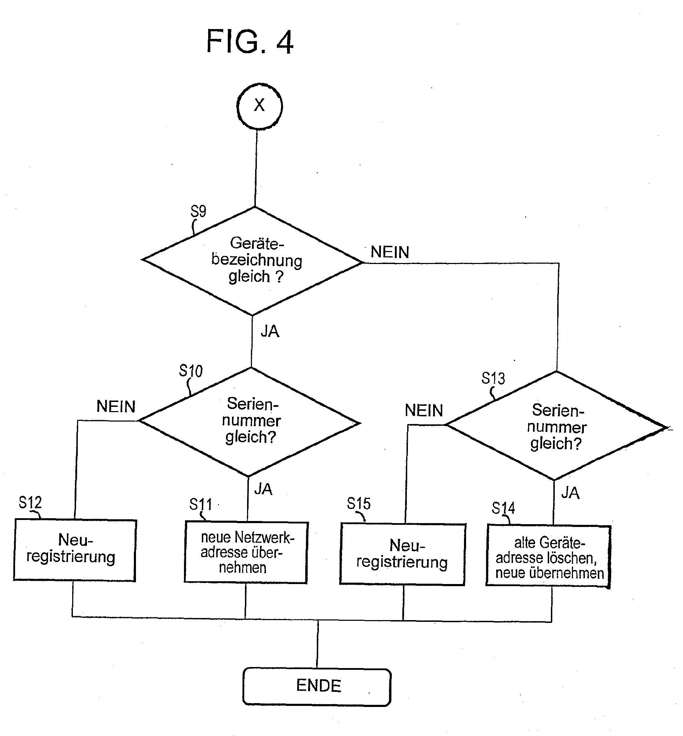

Nachdem zuvor anhand der Fig. 2 die Netzübergangseinrichtung GW1 in dem für ein Verständnis der vorliegenden Erfindung ausreichenden Umfang erläutert worden ist, werden nunmehr anhand von Fig. 3 und Fig. 4 Arbeitsabläufe betrachtet, die in der betreffenden Netzübergangseinrichtung GW1 ablaufen, wenn sich in dieser Netzübergangseinrichtung GW1 ein Hausgerät zwecks Registrierung mit seiner Gesamtadresse anmeldet. Wie bereits erläutert, umfasst diese Gesamtadresse eine die Ansteuerung des jeweiligen Gerätes in der Netzwerkanordnung ermöglichende Netzwerkadresse, eine den Gerätetyp des jeweiligen Gerätes angebende Gerätebezeichnung und eine dem jeweiligen Gerät individuell zugehörige Seriennummer. Die Netzwerkadresse und die zugehörige Seriennummer des betreffenden Hausgerätes werden dem diesem zugehörigen Buskoppler entnommen, in welchem diese Adressenteile gespeichert sind. Die Gerätebezeichnung des betreffenden Hausgerätes wird indessen aus dem Hausgerät selbst abgerufen, da sie im vorliegenden Fall nur dort vorhanden ist. Die geschilderte Anmeldungsprozedur kann beispielsweise von dem dem betreffenden Hausgerät zugehörigen Buskoppler aus erfolgen.

Im Zuge des erwähnten Vorgangs wird der Netzübergangseinrichtung GW1 bezüglich des betreffenden Hausgerätes als Adressenangabe eine Gesamtadresse bereitgestellt, die, wie in Verbindung mit Fig. 2 bereits erläutert, aus einer Netzwerkadresse, einer Serien- bzw. Gerätenummer und einer Gerätebezeichnung besteht. Gemäß Fig. 3 beginnt die daraufhin ablaufende Prozedur nach dem Start mit dem Schritt S1, bei dem mittels des in Fig. 2 dargestellten Vergleichers VE überprüft wird, ob die in der zugeführten Gesamtadresse enthaltene Netzwerkadresse mit einer Netzwerkadresse eines in dem Anmeldungsspeicher AN der Netzübergangseinrichtung GW1 bereits registrierten Hausgerätes übereinstimmt oder nicht. Wird eine solche Übereinstimmung festgestellt, so wird die beim Schritt S1 gestellte Frage mit JA beantwortet; andernfalls wird die betreffende Frage mit NEIN beantwortet. Im vorliegenden Fall sei angenommen, dass die Netzwerkadresse der der Netzübergangseinrichtung GW1 zugeführten Gesamtadresse mit einer Netzwerkadresse einer in dem Anmeldungsspeicher AN bereits gespeicherten Gesamtadresse eines Hausgeräts übereinstimmt. Damit geht die Ablauffolge in Fig. 3 weiter zum Schritt S2. Dies bewirkt die in Fig. 2 dargestellte Auswertungseinrichtung AU im Zusammenwirken mit der Steuereinrichtung ST.

Beim Schritt S2 wird mittels des Vergleichers VE gemäß Fig. 2 überprüft, ob die in der der Netzübergangseinrichtung GW1 zugeführten Gesamtadresse enthaltene Gerätebezeichnung mit der Gerätebezeichnung derjenigen in dem Anmeldungsspeicher AN gemäß Fig. 2 gespeicherten Gesamtadresse übereinstimmt, deren Netzwerkadresse bereits als mit der Netzwerkadresse der zugeführten Gesamtadresse übereinstimmend festgestellt worden ist. Sind die Gerätebezeichnungen der so miteinander verglichenen Adressenangaben gleich, so wird die Frage gemäß dem Schritt S2 mit JA beantwortet; andernfalls wird sie mit NEIN beantwortet. Im Falle der Übereinstimmung der betreffenden Gerätebezeichnungen geht die Verarbeitung weiter zum Schritt S3. Dies bewirkt wieder die in Fig. 2 dargestellte Auswertungseinrichtung AU im Zusammenwirken mit der Steuereinrichtung ST.

Beim Schritt S3 wird wieder mittels des Vergleichers VE geprüft, ob die Seriennummer in der der Netzübergangseinrichtung GW1 zugeführten Gesamtadresse gleich ist mit einer Seriennummer eines in dem Anmeldungsspeicher AN der Netzübergangseinrichtung GW1 mit seiner Gesamtadresse bereits registrierten Hausgeräts, dessen Netzwerkadresse und dessen Gerätebezeichnung mit der Netzwerkadresse bzw. der Gerätebezeichnung der Gesamtadresse des Hausgeräts übereinstimmen, welches sich an der Netzübergangseinrichtung GW1 zwecks Registrierung angemeldet hat. Stimmen die beiden miteinander verglichenen Seriennummern überein bzw. ist die Seriennummer der der Netzübergangseinrichtung GW1 zugeführten erwähnten Gesamtadresse gleich der Seriennummer der betrachteten Gesamtadresse, die in dem Anmeldungsspeicher AN der Netzübergangseinrichtung GW1 gespeichert ist, so gelangt die Verarbeitung vom Schritt S3 mit der Antwort JA zum Schritt S4. Dies bewirkt wiederum die in Fig. 2 dargestellte Auswertungseinrichtung AU im Zusammenwirken mit der Steuereinrichtung ST.

Beim Schritt S4 wird im vorliegenden Fall das Gerät bzw. Hausgerät, welches sich an der Netzübergangseinrichtung GW1 angemeldet hat, als bereits angemeldet akzeptiert wird. Ein solcher Betriebsfall kommt beispielsweise nach einem Stromausfall vor, als dessen Folge die betroffenen Hausgeräte versuchen, sich erneut in wenigstens einer der Netzübergangseinrichtungen innerhalb ihrer zugehörigen Netzwerkanordnung anzumelden.

Nach Ausführung des Schrittes S4 ist im vorliegenden Fall das Ende des Verfahrensablaufs erreicht.

Wird im Zuge des in Fig. 3 veranschaulichten Verfahrensablaufs beim Schritt S2 festgestellt, dass die Gerätebezeichnung in der der Netzübergangseinrichtung GW1 zugeführten Gesamtadresse nicht gleich der Gerätebezeichnung eines Gerätes bzw. Hausgerätes ist, dessen Netzwerkadresse mit der Netzwerkadresse in der der Netzübergangseinrichtung GW1 zugeführten Gesamtadresse übereinstimmt, dann geht die Verarbeitung vom Schritt S2 weiter zum Schritt S6. Dies bewirkt ebenfalls wieder die in Fig. 2 dargestellte Auswertungseinrichtung AU im Zusammenwirken mit der Steuereinrichtung ST.

Beim Schritt S6 wird mittels des Vergleichers VE gemäß Fig. 2 wieder wie beim Schritt S3 geprüft, ob die Seriennummer der der Netzübergangseinrichtung GW1 zugeführten Gesamtadresse die gleiche ist wie die Seriennummer der in dem Anmeldungsspeicher AN gespeicherten Gesamtadresse, deren Netzwerkadresse mit der Netzwerkadresse der der Netzübergangseinrichtung GW1 zugeführten Gesamtadresse übereinstimmt. Stimmen in diesem Fall die Seriennummern der beiden Gesamtadressen überein, so wird die Frage gemäß dem Schritt S6 mit JA beantwortet, und der Verfahrensablauf geht weiter zum Schritt S7. Dies bewirkt wieder die in Fig. 2 dargestellte Auswertungseinrichtung AU im Zusammenwirken mit der Steuereinrichtung ST.

Beim Schritt S7 wird die als alte Geräteadresse bezeichnete Gesamtadresse, die im Anmeldungsspeicher AN der Netzübergangseinrichtung GW1 gemäß Fig. 2 enthalten ist und die in die gerade betrachtete Vergleichs- bzw. Prüfungsprozedur einbezogen war, gelöscht, und an deren Stelle wird die neue Gesamtadresse, die der Netzübergangseinrichtung GW1 zugeführt worden ist, übernommen. Nach Abschluss des Schritts S7 ist wieder das Ende des Verfahrensablaufs erreicht.

Ein solcher Fall, wie er zuletzt betrachtet worden ist, tritt beispielsweise dann auf, wenn der Buskoppler, der in einem bestimmten Hausgerät eingebaut war, aus diesem ausgebaut und in ein anderes Hausgerät desselben Haushalts eingebaut worden ist. Wie oben erwähnt, enthält nämlich der in einem Hausgerät eingebaute Buskoppler die seinem zugehörigen Hausgerät eigene Seriennummer gespeichert, und diese Seriennummer bleibt in dem Buskoppler zunächst auch dann erhalten, wenn dieser in ein anderes Hausgerät eingebaut wird. Dabei kann z.B. folgende Adressensituation vorliegen - anmeldendes Hausgerät enthält die Gesamtadresse: Hausadressenteil 12 - Linkadressenteil 34 - Seriennummer 56 - Gefrierschrank 225; im Anmeldungsspeicher AN ist jedoch die Gesamtadresse gespeichert: Hausadressenteil 12 - Linkadressenteil 34 - Seriennummer 56 - E-Herd 789.

Anschließend sei der Fall betrachtet, dass im Zuge des erläuterten Adressenvergleichs in der Netzübergangseinrichtung GW1 festgestellt wird, dass die zugeführte Gesamtadresse dieselbe Netzwerkadresse enthält wie eine im Anmeldungsspeicher AN dieser Netzübergangseinrichtung GW1 gespeicherte Gesamtadresse und dass auch die Gerätebezeichnungen in den betreffenden Gesamtadressen gleich sind, dass jedoch die Seriennummern dieser Gesamtadressen nicht gleich sind. In diesem Fall gelangt man vom Schritt S3 zum Schritt S5. Dies bewirkt wieder die in Fig. 2 dargestellte Auswertungseinrichtung AU im Zusammenwirken mit der Steuereinrichtung ST.

Beim Schritt S5 wird mittels der Steuereinrichtung ST veranlasst, dass beide Geräteadressen, also die Gesamtadressen gelöscht werden. Dies bedeutet, dass die der Netzübergangseinrichtung GW1 im Zuge einer Anmeldung zugeführte Gesamtadresse zurückgewiesen wird und dass die mit dieser Gesamtadresse verglichene Gesamtadresse aus dem Anmeldungsspeicher AN gelöscht wird, die mit ihrer Netzwerkadresse und der Gerätebezeichnung mit den entsprechenden Adressenteilen der Gesamtadresse des sich in der Netzübergangseinrichtung GW1 anmeldenden Hausgerätes übereinstimmt. Damit sind die beiden Geräte bzw. Hausgeräte, deren Gesamtadressen gerade zurückgewiesen bzw. gelöscht worden sind, von der Netzübergangseinrichtung GW1 gewissermaßen abgemeldet. Nach Ausführen des Schrittes S5 ist wieder das Ende der Ablauffolge erreicht.

Die zuletzt betrachtete Adressensituation kann beispielsweise dann auftreten, wenn in einem Haushalt mit netzfähigen Hausgeräten zusätzlich zu einem bereits dort existierenden und in zugehörigen Netzübergangseinrichtungen registrierten Hausgerät, wie beispielsweise einer Waschmaschine, ein gleichartiges Hausgerät, also nochmals eine Waschmaschine installiert wird, der dann jedoch im Zuge der Netzwerkadressenzuteilung in fehlerhafter Weise dieselbe Netzwerkadresse zugeteilt worden ist, welche bereits der in dem genannten Haushalt vorhandenen erstgenannten Waschmaschine zugeteilt worden war. Genauer gesagt kann ein solcher fehlerhafter Adressenzuweisungsvorgang insbesondere bei der geschilderten Linkadressensuche bzw. -zuteilung auftreten. Bewirkt nämlich ein an der beschriebenen Netzwerkanordnung sich neu anmeldendes Hausgerät die Abgabe einer Linkadresse, die bereits ein anderes, zum selben Haushalt gehörenden Hausgerät besitzt, und hat dieses andere Hausgerät auf diese Linkadressenabgabe hin nicht widersprochen, so gibt es in dem betreffenden Haushalt zwei Hausgeräte mit derselben Netzwerkadresse.

Auf die vorstehend erläuterte, gemäß der Erfindung erfolgende Abmeldung der beiden betrachteten Hausgeräte hin können im übrigen unterschiedliche Fallerkennungsmechanismen in der Netzwerkanordnung eingesetzt werden, um den aktuellen Sachstand zu ermitteln. Die betrachtete Netzübergangseinrichtung GW1 kann beispielsweise durch die Steuereinrichtung ST gesteuert sämtliche Waschmaschinen im Hausadressenbereich 12 suchen. Meldet sich nur eine Waschmaschine mit den Daten: Hausadressenteil 12 - Linkadressenteil 34 - Seriennummer (nicht 56) - Waschmaschine 123, dann wurde der Busknoten aus der alten Waschmaschine ausgebaut und in der neuen Waschmaschine eingesetzt. Melden sich jedoch zwei Waschmaschinen mit unterschiedlichen Linkadressenteilen, jedoch gleichen Hausadressenteilen, dann wurde eine sogenannte Linkadressenkollision zwischenzeitlich netzwerktechnisch behoben. Melden sich die beiden Waschmaschinen jedoch wieder mit gleichem Hausadressenteil, gleichem Linkadressenteil, aber unterschiedlicher Seriennummer, veranlasst die Netzübergangseinrichtung GW1 erneut die geschilderte Abmeldung der beiden Hausgeräte.

Es kann auf die erwähnte Abmeldung der beiden Hausgeräte hin auch so vorgegangen werden, dass die beiden Hausgeräte per Befehl von der Steuereinrichtung ST her veranlasst werden, sich mit einer erneuten Anmeldung in der Netzübergangseinrichtung registrieren zu lassen. Alternativ dazu kann auch so vorgegangen werden, dass die Veranlassung einer erneuten Anmeldung für eine Registrierung des jeweiligen Gerätes in der Netzwerkanordnung auf das Löschen der diesem zugehörigen Adressenangabe hin dadurch erfolgt, dass die Prozedur der Netzwerkadressenzuteilung zumindest hinsichtlich eines geräteindividuellen Adressenteiles für das jeweilige Gerät erneut nach Ablauf einer festlegbaren Zeitspanne durchgeführt wird.

Nunmehr sei folgender Fall betrachtet: im Anmeldungsspeicher AN der Netzübergangseinrichtung GW1 gemäß Fig. 2 ist die Gesamtadresse eines Hausgeräts, beispielsweise des Trockners registriert als Hausadresse 12 - Linkadresse 36 - Seriennummer 61 - Trockner 456 und ein neues Hausgerät versucht, sich in der Netzübergangseinrichtung GW1 registrieren zu lassen mit der Gesamtadresse: Hausadresse 12 - Linkadresse 36 - Seriennummer 68 - Backofen 678. Bezogen auf das Ablaufdiagramm gemäß Fig. 3 sind in diesem Fall in den Adressenvergleich die Schritte S1, S2 und S6 einbezogen. Da die beim Schritt S6 gestellte Frage hier mit NEIN beantwortet wird, gelangt man zum Schritt S8. Dies bewirkt wieder die in Fig. 2 dargestellte Auswertungseinrichtung AU im Zusammenwirken mit der Steuereinrichtung ST.

Beim Schritt S8 werden ebenfalls die beiden Geräteadressen gelöscht, und die betreffenden Hausgeräte werden von der Netzübergangseinrichtung GW1 abgemeldet. Auch hier liegt wieder ein entsprechendes Linkadressenproblem vor, wie es zuvor im Zusammenhang mit dem Schritt S5 erläutert worden ist. In entsprechender Weise sind auch hier Maßnahmen zu treffen, wie sie im Zusammenhang mit dem Schritt S5 erläutert worden sind. Nach Abschluss des Schritts S8 ist wieder das Ende der Ablaufprozedur erreicht.

Im folgenden wird der Fall betrachtet, dass beim Schritt S1 in dem in Fig. 3 dargestellten Ablaufdiagramm festgestellt wird, dass die Netzwerkadressen der miteinander verglichenen Gesamtadressen nicht gleich sind, womit die beim Schritt S1 gestellte Frage mit NEIN beantwortet wird. Damit gelangt man gemäß Fig. 3 zu einem Konnektor X, der auch im Ablaufdiagramm gemäß Fig. 4 zu finden ist und von dem der Verfahrensablauf zu einem Schritt S9 gelangt. Dies bewirkt wieder die in Fig. 2 dargestellte Auswertungseinrichtung AU im Zusammenwirken mit der Steuereinrichtung ST.

Beim Schritt S9 wird mittels des Vergleichers VE gemäß Fig. 2 überprüft, ob die Gerätebezeichnung in der der Netzübergangseinrichtung GW1 zugeführten Gesamtadresse gleich ist wie eine Gerätebezeichnung einer in dem Anmeldungsspeicher AN der Netzübergangseinrichtung GW1 gespeicherten Gesamtadresse eines dort registrierten Hausgeräts. Ist dies der Fall, so wird die beim Schritt S9 gestellte Frage mit JA beantwortet, und die Ablauffolge geht weiter zum Schritt S10. Dies bewirkt wieder die in Fig. 2 dargestellte Auswertungseinrichtung AU im Zusammenwirken mit der Steuereinrichtung ST.

Beim Schritt S10 wird mittels des Vergleichers VE gemäß Fig. 2 überprüft, ob die in der der Netzübergangseinrichtung GW1 zugeführten Gesamtadresse enthaltene Seriennummer mit der Seriennummer der in dem Anmeldungsspeicher AN der Netzübergangseinrichtung GW1 gespeicherten Gesamtadresse übereinstimmt, deren Gerätebezeichnung mit der Gerätebezeichnung in der der Netzübergangseinrichtung GW1 zugeführten Adressenangabe übereinstimmt. Ist dies der Fall, so gelangt der Ablauf vom Schritt S10 zum Schritt S11. Dies bewirkt wiederum die in Fig. 2 dargestellte Auswertungseinrichtung AU im Zusammenwirken mit der Steuereinrichtung ST.

Beim Schritt S11 wird in dem Anmeldungsspeicher AN der Netzübergangseinrichtung GW1 in der dort gespeicherten, zuvor erwähnten Gesamtadresse die neue Netzwerkadresse anstelle der alten Netzwerkadresse übernommen wird. Der betrachtete Fall entspricht somit einem Umzug eines Hausgeräts von einem Haushalt in einen anderen Haushalt. Nach Abschluss des Schritts S11 gelangt die in Fig. 4 dargestellte Prozedur zu einem Ende.

Wird beim Schritt S10 festgestellt, dass die Seriennummern der miteinander verglichenen Adressenangaben nicht gleich sind, so wird die entsprechende Frage beim Schritt S10 mit NEIN beantwortet, und der Verfahrensablauf geht weiter zum Schritt S12. Dies bewirkt wieder die in Fig. 2 dargestellte Auswertungseinrichtung AU im Zusammenwirken mit der Steuereinrichtung ST.

Beim Schritt S12 erfolgt eine Neuregistrierung des Hausgeräts, dessen Gesamtadresse der Netzübergangseinrichtung GW1 zugeführt ist. In diesem Fall wird die betreffende Adressenangabe in den Anmeldungsspeicher AN der Netzübergangseinrichtung GW1 gemäß Fig. 2 übernommen. Damit ist der geschilderte Anmeldungsablauf am Ende.

Anschließend sei unter Bezugnahme auf Fig. 4 der Fall betrachtet, dass beim Schritt S9 die Frage nach dem Vorliegen einer gleichen Gerätebezeichnung bei den miteinander verglichenen Gesamtadressen mit NEIN beantwortet wird. Damit geht die Ablauffolge vom Schritt S9 weiter zum Schritt S13. Dies bewirkt wiederum die in Fig. 2 dargestellte Auswertungseinrichtung AU im Zusammenwirken mit der Steuereinrichtung ST.

Beim Schritt S13 wird mittels des Vergleichers VE gemäß Fig. 2 überprüft, ob die in der Netzübergangseinrichtung GW1 miteinander verglichenen Gesamtadressen gleiche Seriennummer aufweisen. Wird diese Frage mit JA beantwortet, so geht die Ablauffolge vom Schritt S13 weiter zum Schritt S14, was wieder die in Fig. 2 dargestellte Auswertungseinrichtung AU im Zusammenwirken mit der Steuereinrichtung ST bewirkt.

Beim Schritt S14 wird die in dem Anmeldungsspeicher AN der Netzübergangseinrichtung GW1 gespeicherte alte Geräteadresse bzw. Gesamtadresse gelöscht, und die der Netzübergangseinrichtung GW1 gerade für eine Registrierung zugeführte neue Gesamtadresse wird übernommen. Hierdurch erfolgt also eine Korrektur der in dem Anmeldungsspeicher AN der Netzübergangseinrichtung GW1 gespeicherten Gesamtadresse durch die der betreffenden Netzübergangseinrichtung GW1 gerade zugeführte Gesamtadresse; zum einen hat ein Wechsel des Standortes des betreffenden Hausgeräts von einem Haushalt in einen anderen Haushalt stattgefunden, und zum anderen ist der Buskoppler, in welchem die Seriennummer des ursprünglichen Hausgeräts noch gespeichert ist, in ein anderes Hausgerät eingebaut worden.

Nunmehr sei noch der Fall betrachtet, dass beim Schritt S13 gemäß Fig. 4 die dort gestellte Frage mit NEIN beantwortet wird. In diesem Falle sind sämtliche Adressenteile der der Netzübergangseinrichtung GW1 zum Zwecke einer Registrierung zugeführten Adressenangabe nicht in dem Anmeldungsspeicher AN der betreffenden Netzübergangseinrichtung GW1 enthalten. Damit gelangt man vom Schritt S13 zum Schritt S15, was wieder die in Fig. 2 dargestellte Auswertungseinrichtung AU im Zusammenwirken mit der Steuereinrichtung ST bewirkt.

Beim Schritt S15 erfolgt eine Neuregistrierung desjenigen Hausgerätes im Anmeldungsspeicher AN der Netzübergangseinrichtung GW1, dessen Gesamtadresse dieser Netzübergangseinrichtung gerade zugeführt worden ist. Sodann gelangt man zum Ende der in Fig. 4 dargestellten Ablauffolge.

Abschließend sei noch angemerkt, dass in den Ablaufdiagrammen gemäß Fig. 3 und 4 die Vergleichsvorgänge in der Reihenfolge Netzwerkadressen-Vergleich, Gerätebezeichnungs-Vergleich und Seriennummern-Vergleich veranschaulicht worden sind. Es sei jedoch angemerkt, dass die betreffenden Vergleichsschritte auch in anderer Reihenfolge ausgeführt werden können.

Außerdem kann der Gerätebezeichnungs-Vergleich bei dem Verfahrensablauf gemäß Fig. 4 gegebenenfalls entfallen, da die Entscheidungsergebnisse dort unabhängig davon, ob die jeweilige JA oder NEIN lautet, vom Schritt S4 gemäß Fig. 4 ausgehend jeweils praktisch gleich sind. Somit kann der Verfahrensablauf vom Konnektor X gleich zum Schritt S13 mit den anschließenden Schritten S14 und S15 weiterlaufen. In diesem Fall können die Schritte S10, S11 und S12 entfallen.

Im übrigen ist noch darauf hinzuweisen, dass die zuvor erläuterten Vergleichs- und Auswertungsvorgänge nicht unbedingt in der Netzübergangseinrichtung GW1 oder in einer anderen Netzübergangseinrichtung der vorliegenden Netzwerkanordnung auszuführen sind. Vielmehr können die betreffenden Vergleichs- und Auswertungsvorgänge in einer Vergleichs- und Auswertungseinrichtung ausgeführt werden, welche wenigstens einer der Netzübergangseinrichtungen, wie der Netzübergangseinrichtung GW1 zugeordnet ist. Die erwähnte zugeordnete Vergleichs- und Auswertungseinrichtung kann beispielsweise in einem Personalcomputer, wie dem Personalcomputer PC1 enthalten sein, der mit der Netzübergangseinrichtung GW1 über das Netzwerk NET1 verbunden ist.

### Bezugszeichenliste

- AN: Anmeldungsspeicher
- AU: Auswertungseinrichtung
- B: Bedienungselemente
- BCU1, BCUn: Buskoppeleinheit, Buskoppler
- CB1, CBn: Anschlussleitungen
- CPU: Zentraleinheit
- D: Anzeigeeinrichtung
- EA1, EA2: Eingangs-Ausgangs-Anschluss
- GW1, GWx: Netzübergangseinrichtung, Gateway
- HB: Busleitungsanordnung, Heim- bzw. Hausbus
- HG1, HGn: Gerät, Hausgerät
- IB: interner Bus
- IF1, IFn: Schnittstelleneinrichtung
- IFA: Schnittstelleneinrichtung
- IFx, IFy: Schnittstelleneinrichtung
- NET1, NETx: Netzwerke
- PC1, PCx: Steuerungs-/Überwachungsgerät, Personalcomputer
- PS: Spannungsversorgungseinrichtung
- RAM: Schreib-Lese-Speicher
- ROM: Festwertspeicher
- RP: Leseausgang
- S1 bis S15: Schritt
- SE1, SE2, SE3: Eingang
- SL: mechanische Schalteinrichtung
- SP: Schalter
- ST: Steuereinrichtung
- V1, V2: Eingang
- VE: Vergleicher
- WE: Weiterleitungseinrichtung
- WP: Schreibeingang
- X: Konnektor

## Patentansprüche

1. Verfahren zur Steuerung der Registrierung von Geräten, insbesondere von netzfähigen Hausgeräten in einer Netzwerkanordnung, an der die betreffenden Geräte für eine Übertragung von Datensignalen und Befehlen zu und/oder von anderen Geräten und/oder Einrichtungen angeschlossen sind und in der sich die betreffenden Geräte für eine Registrierung mit Adressenangaben anmelden, die jeweils eine die Ansteuerung des jeweiligen Gerätes in der Netzwerkanordnung ermöglichende Netzwerkadresse, eine den Gerätetyp des jeweiligen Gerätes angebende Gerätebezeichnung und eine dem jeweiligen Gerät individuell zugehörige Gerätenummer umfassen, unter Berücksichtigung von Adressenangaben von in der Netzwerkanordnung gegebenenfalls bereits registrierten Geräten,
**dadurch gekennzeichnet, dass** die Adressenangaben der sich in der Netzwerkanordnung (HB, GW1 bis GWx, NET1 bis NETx) anmeldenden Geräte (HG1 bis HGn) jeweils mit Adressenangaben von in dieser bereits registrierten Geräten (HG1 bis HGn) verglichen werden und dass lediglich bei vollständiger Übereinstimmung der jeweils miteinander verglichenen Adressenteile oder bei Nichtüberstimmung zumindest der Netzwerkadressen der jeweils miteinander verglichenen Adressenangaben die Adressenangaben der sich in der Netzwerkanordnung (HB, GW1 bis GWx, NET1 bis NETx) anmeldenden Geräte (HG1 bis HGn) für eine Registrierung herangezogen werden.

2. Verfahren nach Anspruch 1, **dadurch gekennzeichnet, dass** für den genannten Vergleich jeweils einer der folgenden Vergleichsvorgänge ausgeführt wird:
- bei Anmeldung eines Gerätes (HG1 bis HGn) mit gleicher Netzwerkadresse, mit gleicher Gerätebezeichnung und mit gleicher Seriennummer wie ein in der Netzwerkanordnung (HB, GW1 bis GWx, NET1 bis NETx) bereits registriertes Gerät (HG1 bis HGn) wird diese Adressenangabe als dem betreffenden registrierten Gerät (HG1 bis HGn) bereits zugehörige Adressenangabe ohne eine Änderung bewertet,
- bei Anmeldung eines Gerätes (HG1 bis HGn) mit gleicher Netzwerkadresse, mit verschiedener Gerätebezeichnung und mit gleicher Seriennummer wie ein in der Netzwerkanordnung (HB, GW1 bis GWx, NET1 bis NETx) bereits registriertes Gerät (HG1 bis HGn) wird die dem betreffenden registrierten Gerät (HG1 bis HGn) zugehörige Adressenangabe durch die dem sich anmeldenden Gerät (HG1 bis HGn) zugehörige Adressenangabe für eine Registrierung ersetzt,
- bei Anmeldung eines Gerätes (HG1 bis HGn) mit gleicher Netzwerkadresse und entweder mit verschiedener Gerätebezeichnung und verschiedener Seriennummer oder mit gleicher Gerätebezeichnung und verschiedener Seriennummer wie ein in der Netzwerkanordnung (HB, GW1 bis GWx, NET1 bis NETx) bereits registriertes Gerät (HG1 bis HGn) werden die dem betreffenden registrierten Gerät (HG1 bis HGn) zugehörige Adressenangabe und die dem sich anmeldenden Gerät (HG1 bis HGn) zugehörige Adressenangabe jeweils gelöscht,
- bei Anmeldung eines Gerätes (HG1 bis HGn) mit verschiedener Netzwerkadresse und mit gleicher Seriennummer wie ein in der Netzwerkanordnung (HB, GW1 bis GWx, NET1 bis NETx) bereits registriertes Gerät (HG1 bis HGn) wird die dem betreffenden registrierten Gerät (HG1 bis HGn) zugehörige Adressenangabe durch die dem sich anmeldenden Gerät (HG1 bis HGn) zugehörige Adressenangabe für eine Registrierung ersetzt
- und bei Anmeldung eines Gerätes (HG1 bis HGn) mit verschiedener Netzwerkadresse und mit verschiedener Seriennummer wie ein in der Netzwerkanordnung (HB, GW1 bis GWx, NET1 bis NETx) bereits registriertes Gerät (HG1 bis HGn) wird die dem betreffenden sich anmeldenden Gerät (HG1 bis HGn) zugehörige Adressenangabe für eine Neuregistrierung herangezogen.

3. Verfahren nach Anspruch 1 oder 2, **dadurch gekennzeichnet, dass** bei Anmeldung eines Gerätes (HG1 bis HGn) mit einer von der Netzwerkadresse eines in der Netzwerkanordnung (HB, GW1 bis GWx, NET1 bis NETx) bereits registrierten Gerätes (HG1 bis HGn) verschiedenen Netzwerkadresse zusätzlich auch die Gerätebezeichnung des sich anmeldenden Gerätes (HG1 bis HGn) berücksichtigt wird.

4. Verfahren nach einem der Ansprüche 1 bis 3, **dadurch gekennzeichnet, dass** das jeweilige Gerät (HG1 bis HGn), dessen Adressenangaben in der Netzwerkanordnung (HB, GW1 bis GWx, NET1 bis NETx) gelöscht worden sind, veranlasst wird, sich erneut in der Netzwerkanordnung (HB, GW1 bis GWx, NET1 bis NETx) anzumelden und registrieren zu lassen.

5. Verfahren nach Anspruch 4, **dadurch gekennzeichnet, dass** die Veranlassung einer erneuten Anmeldung für eine Registrierung in der Netzwerkanordnung (HB, GW1 bis GWx, NET1 bis NETx) durch Abgabe eines gesonderten Befehls an das jeweiligen Gerät (HG1 bis HGn) auf das Löschen der diesem zugehörigen Adressenangabe in der Netzwerkanordnung (HB, GW1 bis GWx, NET1 bis NETx) hin erfolgt.

6. Verfahren nach Anspruch 4, **dadurch gekennzeichnet, dass** die Veranlassung einer erneuten Anmeldung für eine Registrierung des jeweiligen Gerätes (HG1 bis HGn) in der Netzwerkanordnung (HB, GW1 bis GWx, NET1 bis NETx) auf das Löschen der diesem zugehörigen Adressenangaben hin **dadurch** erfolgt, dass die Prozedur der Netzwerkadressenzuteilung zumindest hinsichtlich eines geräteindividuellen Adressenteiles für das jeweilige Gerät (HG1 bis HGn) erneut nach Ablauf einer festlegbaren Zeitspanne durchgeführt wird.

7. Verfahren nach einem der Ansprüche 1 bis 6, **dadurch gekennzeichnet, dass** in einer Netzwerkanordnung (HB, GW1 bis GWx, NET1 bis NETx) mit einer Busleitung (HB), an der die jeweiligen Geräte (HG1 bis HGn) über Buskoppler (BCU1 bis BCUn) angeschlossen sind, in deren jeden die Netzwerkadresse und die Seriennummer eines zugehörigen Gerätes (HG1 bis HGn) gespeichert werden und die mit wenigstens einem weiteren Netzwerk (NET1 bis NETx) über wenigstens eine Netzübergangseinrichtung (GW1 bis GWx) verbunden sind, in der die gesamten Adressenangaben der mit der genannten Busleitung (HB) verbundenen Geräte (HG1 bis HGn) auf deren Registrierung hin gespeichert werden, ein Vergleich der Adressenangaben eines sich in der Netzwerkanordnung (HB, GW1 bis GWx, NET1 bis NETx) neu anmeldenden Gerätes (HG1 bis HGn) mit den Adressenangaben der in dieser Netzwerkanordnung (HB, GW1 bis GWx, NET1 bis NETx) registrierten Geräte (HG1 bis HGn) in der zumindest einen Netzübergangseinrichtung (GW1 bis GWx) oder in einer dieser zugeordneten Einrichtung durchgeführt wird.

8. Vorrichtung zur Durchführung des Verfahrens nach einem der Ansprüche 1 bis 7 mittels einer Steuerung der Registrierung von Geräten, insbesondere von netzfähigen Hausgeräten in einer Netzwerkanordnung, an der die betreffenden Geräte für eine Übertragung von Datensignalen und Befehlen zu und/oder von anderen Geräten und/oder Einrichtungen angeschlossen sind und in der sich die betreffenden Geräte für eine Registrierung mit Adressenangaben anmelden, die jeweils eine die Ansteuerung des jeweiligen Gerätes in der Netzwerkanordnung ermöglichende Netzwerkadresse, eine den Gerätetyp des jeweiligen Gerätes angebende Gerätebezeichnung und eine dem jeweiligen Gerät individuell zugehörige Gerätenummer umfassen, unter Berücksichtigung von Adressenangaben von in der Netzwerkanordnung gegebenenfalls bereits registrierten Geräten,
**dadurch gekennzeichnet, dass** eine Vergleicher- und Auswertungseinrichtung (VE, AU) vorgesehen ist, welche die Adressenangaben der sich in der Netzwerkanordnung (HB, GW1 bis GWx, NET1 bis NETx) anmeldenden Geräte (HG1 bis HGn) jeweils mit Adressenangaben von in dieser bereits registrierten Geräten (HG1 bis HGn) zu vergleichen gestattet und welche lediglich bei vollständiger Übereinstimmung der jeweils miteinander verglichenen Adressenteile oder bei Nichtüberstimmung zumindest der Netzwerkadressen der jeweils miteinander verglichenen Adressenangaben die Adressenangaben der sich in der Netzwerkanordnung (HB, GW1 bis GWx, NET1 bis NETx) anmeldenden Geräte (HG1 bis HGn) für eine Registrierung freizugeben erlaubt.

9. Vorrichtung nach Anspruch 8, **dadurch gekennzeichnet, dass** die Vergleichs- und Auswertungseinrichtung (VE, AU) so ausgebildet, dass durch sie
- bei Anmeldung eines Gerätes (HG1 bis HGn) mit gleicher Netzwerkadresse, mit gleicher Seriennummer und mit gleicher Gerätebezeichnung wie ein in der Netzwerkanordnung (HB, GW1 bis GWx, NET1 bis NETx) bereits registriertes Gerät (HG1 bis HGn) diese Adressenangabe als dem betreffenden bereits registrierten Gerät (HG1 bis HGn) zugehörige Adressenangabe bewertbar ist,
- bei Anmeldung eines Gerätes (HG1 bis HGn) mit gleicher Netzwerkadresse und mit gleicher Seriennummer, aber mit verschiedener Gerätebezeichnung wie ein in der Netzwerkanordnung (HB, GW1 bis GWx, NET1 bis NETx) bereits registriertes Gerät (HG1 bis HGn) die dem betreffenden registrierten Gerät (HG1 bis HGn) zugehörige Adressenangabe durch die dem sich anmeldenden Gerät (HG1 bis HGn) zugehörige Adressenangabe für eine Registrierung ersetzbar ist,
- bei Anmeldung eines Gerätes (HG1 bis HGn) mit gleicher Netzwerkadresse und entweder mit verschiedener Seriennummer und verschiedener Gerätebezeichnung oder mit gleicher Gerätebezeichnung und verschiedener Seriennummer wie ein in der Netzwerkanordnung (HB, GW1 bis GWx, NET1 bis NETx) bereits registriertes Gerät (HG1 bis HGn) die dem betreffenden registrierten Gerät (HG1 bis HGn) zugehörige Adressenangabe und die dem sich anmeldenden Gerät (HG1 bis HGn) zugehörige Adressenangabe zu löschen sind,
- bei Anmeldung eines Gerätes (HG1 bis HGn) mit verschiedener Netzwerkadresse aber gleicher Seriennummer wie ein in der Netzwerkanordnung (HB, GW1 bis GWx, NET1 bis NETx) bereits registriertes Gerät (HG1 bis HGn) die dem betreffenden registrierten Gerät (HG1 bis HGn) zugehörige Adressenangabe durch die dem sich anmeldenden Gerät (HG1 bis HGn) zugehörige Adressenangabe für eine Registrierung ersetzbar ist
- und bei Anmeldung eines Gerätes (HG1 bis HGn) mit verschiedener Netzwerkadresse und mit verschiedener Seriennummer wie ein in der Netzwerkanordnung (HB, GW1 bis GWx, NET1 bis NETx) bereits registriertes Gerät (HG1 bis HGn) die dem betreffenden sich anmeldenden Gerät (HG1 bis HGn) zugehörige Adressenangabe als zu einer Neuanmeldung gehörig für eine Registrierung heranziehbar ist.

10. Vorrichtung nach Anspruch 8 oder 9, **dadurch gekennzeichnet, dass** bei Anmeldung eines Gerätes (HG1 bis HGn) mit einer von der Netzwerkadresse eines in der Netzwerkanordnung (HB, GW1 bis GWx, NET1 bis NETx) bereits registrierten Gerätes (HG1 bis HGn) verschiedenen Netzwerkadresse zusätzlich zu den mittels der Vergleichs- und Auswertungseinrichtung (VE, AU) verglichenen Netzwerkadressen und Seriennummern die Gerätebezeichnungen der betreffenden Geräte (HG1 bis HGn) einbezogen sind.

11. Vorrichtung nach einem der Ansprüche 8 bis 10, **dadurch gekennzeichnet, dass** in einer Netzwerkanordnung (HB, GW1 bis GWx, NET1 bis NETx) mit einer Busleitung (HB), an der die jeweiligen Geräte (HG1 bis HGn) über Buskoppler (BCU1 bis BCUn) angeschlossen sind, in deren jeden die Netzwerkadresse und die Seriennummer eines zugehörigen Gerätes (HG1 bis HGn) speicherbar sind, und die mit wenigstens einem weiteren Netzwerk (NET1 bis NETx) über wenigstens eine Netzübergangseinrichtung (GW1 bis GWx) verbunden ist, in der die Gesamtadressen der mit der genannten Busleitung (HB) verbundenen Geräte (HG1 bis HGn) speicherbar sind, die genannte Vergleichs- und Auswertungseinrichtung (VE, AU) in der wenigstens einen Netzübergangseinrichtung (GW1 bis GWx) vorgesehen oder dieser zugeordnet ist.
